# EUROPEAN PATENT SPECIFICATION

(11) **EP 3 575 737 B1**
(45) Date of publication and mention of the grant of the patent: **17.02.2021**
(21) Application number: 18793159.7
(22) Date of filing: 16.04.2018
(51) Int. Cl.: G01B 3/48, G01B 3/00

(54) **THREAD GAUGE**
GEWINDELEHRE
CALIBRE DE FILETAGE

(43) Date of publication of application: 04.12.2019
(73) Proprietor: OSG Corporation, Toyokawa-City, Aichi 442-0005 (JP)
(72) Inventor: AIKAWA, Takuya, Toyokawa-City, Aichi 441-1231 (JP); FUJII, Yasuhito, Toyokawa-City, Aichi 441-1231 (JP)
(74) Representative: Prüfer & Partner mbB Patentanwälte · Rechtsanwälte
(86) International application number: PCT/JP2018/015696
(87) International publication number: WO 2019/202633

(56) References cited:
- CH-A- 228 683
- DE-C- 887 704
- DE-U1-202004 011 683
- DE-U1-202004 018 244
- JP-A- H01 213 501
- JP-A- H07 332 906
- JP-A- 2014 202 547
- JP-U- H0 457 701
- JP-U- H0 665 803
- US-A1- 2015 204 642

## Description

### Technical Field

The present invention relates to a screw gauge, and more particularly, to the screw gauge capable of suppressing breakage of especially a gauge section and a measured object.

### Background Art

There has been a known screw gauge for inspection whether or not the female screw formed in the measured object is within an allowable dimension. For example, the screw gauge is structured by fixing a gauge section fitted with the female screw of the measured object to an end of a hard shaft-like body (Patent Literature 1). An operator will use the screw gauge for carrying out the inspection while holding the body.

Patent Literature 2 discloses a screw gauge with a transmission suppression section suppressing transmission of a load in an axially perpendicular direction applied to an input section of the gauge.

In Patent Literature 3, a device having a flexible shaft for inspection of a thread is shown. The device has a transmission section suppressing transmission of a load in an axially perpendicular direction applied to the input section to the gauge section.

Patent Literature 4 also discloses a transmission section suppressing transmission of a load in an axially perpendicular direction applied to the input section to the gauge section.

### Citation List

### Patent Literature

PTL 1: Japanese Unexamined Patent Application Publication No. 2014-202547
PTL 2: German Patent DE 887 704 C
PTL 3: German Utility Model DE 20 2004 011 683 U1
PTL 4: German Utility Model DE 20 2004 018 244 U1

### Summary of Invention

### Technical Problem

In the conventional art, when the operator applies the load in the axially perpendicular direction to the body in the state where the gauge section is fitted with the female screw, the female screw receives the load applied from the gauge section in the direction in which the shaft-like screw gauge falls toward the measured object (hereinafter referred to as "falling direction") depending on the load in the axially perpendicular direction. In the case of the gauge section fitted with the female screw with nominal diameter of 1.4 mm or smaller, the load applied from the gauge section to the female screw in the falling direction becomes excessive in spite of the small load applied to the body in the axially perpendicular direction. This may result in breakage of the gauge section and the female screw of the measured object.

The present invention has been made to solve the above-described problem. It is therefore an object of the present invention to provide the screw gauge capable of suppressing breakage of the gauge section and the measured object.

### Solution to Problem

In order to achieve the object, the present invention provides a screw gauge as defined by claim 1, which has a shaft-like shape for manually inspecting a female screw by an operator. The female screw with nominal diameter of 1.4 mm or smaller is formed in a measured object. The screw gauge includes a gauge section which is formed at an end of the screw gauge in an axial direction, and fitted with the female screw, an input section which accommodates an input of an external force for fitting the gauge section with the female screw, and a transmission suppression section disposed between the input section and the gauge section. The transmission suppression section suppresses transmission of a load in an axially perpendicular direction applied to the input section to the gauge section.

### Advantageous Effects of Invention

The screw gauge according to claim 1 provides the following effect. As the female screw is inspected through an operator's manual operation of the screw gauge, the load in the axially perpendicular direction may be input to an input section before application of the external force thereto for the purpose of fitting the gauge section with the female screw. The transmission suppression section disposed between the input section and the gauge section serves to suppress transmission of the load applied to the input section in the axially perpendicular direction to the gauge section. The transmission of the above-described load ensures to suppress the load applied from the gauge section to the female screw in the falling direction. As a result, in spite of the gauge section for inspecting the female screw with nominal diameter of 1.4 mm or smaller, it is possible to suppress breakage of the gauge section and the female screw of the measured object owing to the overload applied from the gauge section to the female screw in the falling direction.

In addition, the transmission suppression section elastically deforms to absorb the transmission of the load applied to the input section to the gauge section. This may make the overload from the gauge section hardly applied to the female screw by the elastic deformation of the transmission suppression section. Furthermore, elastic reactive force is generated in the transmission suppression section so as to resist the load applied to the input section. This allows the operator to easily make an adjustment to reduce the elastic reactive force. As a result, it is possible to further suppress breakage of the gauge section and the female screw owing to the overload applied from the gauge section to the female screw.

In addition, at least a part of the elastically deformable outer surface of the transmission suppression section corresponds to the input section held by the operator. In other words, the elastically deformable transmission suppression section is held in the hand. Even if the load in the axially perpendicular direction is applied to the input section to cause the screw gauge entirely falling at the point around the input section as the fulcrum (the gauge section in a pendulum-like motion), the resultant load may be absorbed by the elastic deformation of the transmission suppression section held in the hand. The load applied from the gauge section to the female screw in the falling direction may be suppressed easily, thus making the gauge section and the female screw further hardly breakable.

In addition, the gauge section is fixed to one end of the shaft-like body, and a mount part for the transmission suppression section is attached to the other end opposite the one end in the axial direction. The mount part is connected to the shaft part of the transmission suppression section at the end of the gauge section side. The input section is disposed on the shaft part. The operator holds the elastically deformable shaft part so as to suppress the load applied from the gauge section to the female screw in the falling direction. Then the transmission suppression section may make the gauge section and the female screw of the measured object hardly breakable. The above-described mount part of the transmission suppression section is detachably attached to the other end of the body. It is possible to easily change the shape or the dimension of the shaft part (input section). According to the invention, the transmission suppression section is made of an elastically deformable soft material.

In addition to the effect derived from the screw gauge as described in claim 1, the screw gauge according to claim 2 provides the following effect. The mount part of the transmission suppression section is a cylindrical part into which the other end of the body is inserted and attached. It is possible to easily attach the transmission suppression section to the generally employed screw gauge and the like.

In addition to the effect derived from the screw gauge as described in claim 2, the screw gauge according to claim 3 provides the following effect. The gauge section is a male screw which is fitted with the female screw by the rotary torque in the screw-tightening direction input to the input section. If the rotary torque in the screw-tightening direction to be input to the input section is smaller than a threshold value, a ratchet stop transmits the rotary torque to the gauge section. If the torque in the screw-tightening direction to be input to the input section is equal to or larger than the threshold value, the ratchet stop blocks transmission of the rotary torque to the gauge section. This makes it possible to prevent breakage of the gauge section and the female screw owing to over-tightening of the gauge section. As the ratchet stop is provided at the other end of the body, and inserted into the cylindrical part, the simple structure allows the ratchet stop to prevent breakage of the gauge section and the female screw, and the transmission suppression section to suppress breakage of the gauge section and the female screw.

In addition to the effect derived from the screw gauge as described in claim 3, the screw gauge according to claim 4 provides the following effect. The threshold value for the ratchet stop is set to be in a range between 0.01 Nm or larger and 2 Nm or smaller. In spite of the gauge section for inspecting the female screw with nominal diameter of 1.4 mm or smaller, breakage of the gauge section and the female screw owing to over-tightening of the gauge section may be sufficiently suppressed, allowing the gauge section to be fitted with the female screw within the allowable dimension.

In addition to the effect derived from the screw gauge as described in any of claims 2 to 4, the screw gauge according to claim 5 provides the following effect. The shaft part includes a small-diameter part having its external diameter set to be smaller than the external diameter of the cylindrical part. The structure reduces rigidity of the small-diameter part so as to be easily elastically deformable. Furthermore, the structure allows the operator to visually recognize the position of the elastically deformable small-diameter part. As a result, the structure allows the operator to easily hold the small-diameter part or the part apart from the gauge section farther than the small-diameter part. This allows the load applied from the gauge section to the female screw in the falling direction to be easily suppressed by the elastic deformation of the small-diameter part. As a result, the gauge section and the female screw may further be made hardly breakable.

In addition to the effect derived from the screw gauge as described in any of claims 1 to 5, the screw gauge according to claim 9 provides the following effect. The shaft part includes the small-diameter part having its external diameter set to be smaller than the external diameter of the other end of the body. The structure reduces rigidity of the small-diameter part so as to be easily elastically deformable. Furthermore, the structure allows the operator to visually recognize the position of the elastically deformable small-diameter part. As a result, the structure allows the operator to easily hold the small-diameter part or the part apart from the gauge section farther than the small-diameter part. This allows the load applied from the gauge section to the female screw in the falling direction to be easily suppressed by the elastic deformation of the small-diameter part. As a result, the gauge section and the female screw may further be made hardly breakable.

In addition to the effect derived from the screw gauge as described in any of claims 1 to6, the screw gauge according to claim 7 provides the following effect. Compared with the structure having the solid shaft part, the shaft part may be formed into a cylindrical shape, so that rigidity of the shaft part is lowered to be easily elastically deformable. This allows the load applied from the gauge section to the female screw in the falling direction to be easily suppressed by the elastic deformation of the shaft part. As a result, the gauge section and the female screw may further be made hardly breakable.

### Brief Description of Drawings

FIG. 1(a) is a front view of a screw gauge according to a first embodiment, and FIG. 1(b) is a sectional view of the screw gauge taken along line Ib-Ib of FIG. 1(a).
FIG. 2 is an explanatory view illustrating how the screw gauge is used.
FIG. 3 is an explanatory view illustrating how a transmission suppression section is used as a protection cap.
FIG. 4(a) is a sectional view of the screw gauge according to a second embodiment, and FIG. 4(b) is a front view of the screw gauge according to a third embodiment.
FIG. 5(a) is a front view of a torque driver to which the screw gauge according to a non-claimed example is attached, and FIG. 5(b) is a front view of the screw gauge detached from the torque driver.
FIG. 6(a) is a sectional view of the screw gauge according to a fifth embodiment, and FIG. 6(b) is a sectional view of the screw gauge taken along line VIb-VIb of FIG. 6(a).

### Description of Embodiments

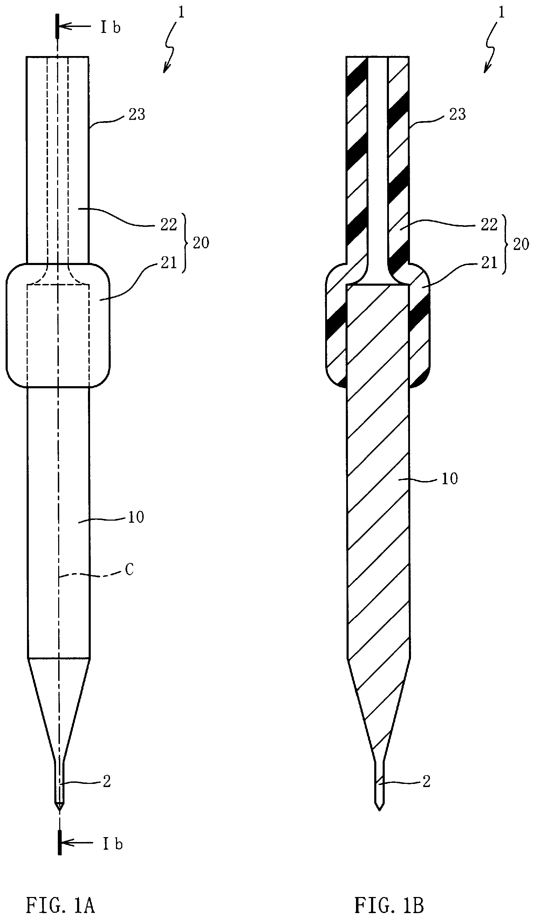

Preferred embodiments of the present invention will be described referring to the drawings. Referring to FIGs. 1(a) and 1(b), a screw gauge 1 according to a first embodiment will be described. FIG. 1(a) is a front view of the screw gauge 1 according to the first embodiment. FIG. 1(b) is a sectional view of the screw gauge 1 taken along line Ib-Ib of FIG. 1(a). Each drawing omits a thread formed on an outer circumferential surface of a gauge section 2. The specification will be explained on the assumption that the upper side and the lower side shown in the respective drawings correspond to the upper side and the lower side of the screw gauge 1, respectively for convenience of explanation.

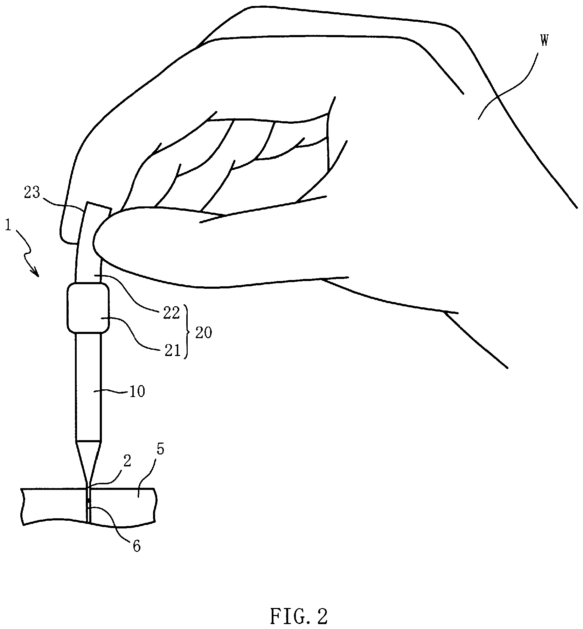

As FIGs. 1(a) and 1(b) illustrate, the screw gauge 1 is a measuring instrument for inspection whether or not a female screw 6 (see FIG. 2) of a miniature screw (nominal diameter of 1.4 mm or smaller) is within an allowable dimension, and formed substantially symmetrically to a center axis C. The screw gauge 1 includes the gauge section 2 fitted with the female screw 6 with the nominal diameter of 1.4 mm or smaller, a shaft-like body 10 having a lower end (one end in the axial direction) to which the gauge section 2 is fixed, and a transmission suppression section 20 attached to an upper end (the other end in the axial direction) of the body 10.

The gauge section 2 is a male screw having an external diameter slightly smaller than the nominal diameter of the female screw 6 to be inspected, serving as a go-side screw plug gauge for inspecting the effective diameter of the female screw 6. The gauge section 2 is made of the alloy of approximately 58 or higher in HRC (Rockwell C hardness), for example, alloy tool steel, high-speed tool steel, and hard metal alloy.

The body 10 is a shaft-like member having the lower end to which the gauge section 2 is fixed. The body 10 is integrally formed with the gauge section 2. The body 10 has its external diameter at the lower end side gradually reduced toward the gauge section 2. The other part of the body 10 at the upper end side has the external diameter set to be substantially the same.

The transmission suppression section 20 is made of an elastically deformable soft synthetic resin material with comparatively low rigidity, for example, vinyl chloride. The transmission suppression section 20 includes a cylindrical part 21 which accommodates detachable press fitting of the upper end of the body 10, and a shaft part 22 connected to the cylindrical part 21. The shaft part (small-diameter part) 22 is a cylindrical member with the external diameter set to be smaller than the external diameter of the cylindrical part 21. The internal diameter of the shaft part 22 is sufficiently smaller than the internal diameter of the cylindrical part 21, and sufficiently larger than the external diameter of the gauge section 2.

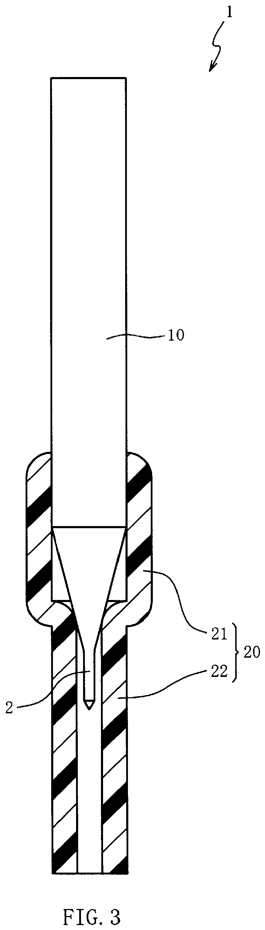

Referring to FIGs. 2 and 3, the usage of the screw gauge 1 or the like will be described. FIG. 2 is an explanatory view illustrating how the screw gauge 1 is used. FIG. 3 is an explanatory view illustrating how the transmission suppression section 20 is used as a protection cap.

As FIG. 2 shows, an operator W holds the shaft part 22 of the transmission suppression section 20 in the hand so as to fit the gauge section 2 with the female screw 6 with nominal diameter of 1.4 mm or smaller, which is formed in a measured object 5. The shaft part 22 is manually turned by the operator W (rotary torque as the external force is input to the shaft part 22) to fit the gauge section 2 with the female screw 6 for performing the inspection. As described above, the operator W holds an input section 23 or an outer circumferential surface of the shaft part 22 to which the external force is input.

There may be the case where the operator W inputs the load in the axially perpendicular direction to the input section 23 in the process of manual fitting of the gauge section 2 with the female screw 6. In the above-described case, the load in the axially perpendicular direction is transmitted to the gauge section 2, causing the screw gauge 1 to fall toward the measured object 5. As a result, the load in the direction in which the screw gauge 1 falls (hereinafter referred to as a "falling direction") is applied from the gauge section 2 to the female screw 6. The strength of the thread of the female screw 6 with nominal diameter of 1.4 mm or smaller is low, and the gauge section 2 for inspecting the female screw 6 is also thin and low in strength. In spite of the low load in the axially perpendicular direction to the input section 23, the load in the falling direction from the gauge section 2 to the female screw 6 may become excessive for the gauge section 2 and the female screw 6 each with comparatively low strength. This may cause the risk of breaking the gauge section 2 and the female screw 6.

In the present embodiment, as the load in the axially perpendicular direction is applied to the input section 23, the shaft part 22 elastically deforms to fall toward the gauge section 2. The elastic deformation of the transmission suppression section 20 serves to suppress transmission of the load applied to the input section 23 in the axially perpendicular direction to the gauge section 2. This allows suppression of the load applied from the gauge section 2 to the female screw 6 in the falling direction. As a result, in spite of the gauge section 2 for inspecting the female screw 6 with nominal diameter of 1.4 mm or smaller, it is possible to suppress breakage of the gauge section 2 and the female screw 6 owing to the overload applied from the gauge section 2 to the female screw 6 in the falling direction.

The elastic modulus (rigidity) of the transmission suppression section 20 may be appropriately set based on the strength according to the dimension of the gauge section 2 and magnitude of the load in the axially perpendicular direction expected to be applied from the screw gauge 1 to the input section 23 upon measurement using the screw gauge 1.

As the transmission suppression section 20 elastically deforms to absorb transmission of the load applied to the input section 23 to the gauge section 2, the transmission suppression section 20 generates the elastic reactive force to resist the load applied to the input section 23. Receiving the elastic reactive force from the input section 23, the operator W is allowed to easily perform an adjustment to reduce the elastic reactive force. As a result, it is possible to easily suppress the load from the gauge section 2 to the female screw 6 in the falling direction, thus further suppressing breakage of the gauge section 2 and the female screw 6.

The outer surface of the elastically deformable shaft part 22 corresponds to the input section 23 held by the operator W in the hand. Even if the operator W twists the shaft part 22 to apply the load in the axially perpendicular direction to the input section 23 to cause the entire screw gauge 1 to fall (the gauge section 2 moves like a pendulum) at the point around the input section 23 as the fulcrum, the resultant load may be absorbed by the elastic deformation of the shaft part 22. As a result, the load applied from the gauge section 2 to the female screw 6 in the falling direction may be easily suppressed. This makes it possible to further make the gauge section 2 and the female screw 6 hardly breakable.

The gauge section 2 is fixed to the lower end of the shaft-like body 10. The upper end of the body 10 is press fitted with the cylindrical part 21 of the transmission suppression section 20. The elastically deformable shaft part 22 is held by the operator W so that the transmission suppression section 20 that makes the gauge section 2 and the female screw 6 hardly breakable is easily attached to the commercially available general screw gauge and the like. As the cylindrical part (mount part) 21 is detachably attached to the upper end of the body 10, it is possible to easily change the shape and dimension of the shaft part 22 by preparing a plurality of transmission suppression sections 20 each having the shaft part 22 with different shape or different dimension (length, thickness) while allowing the cylindrical part 21 to have the common shape.

As the shaft part 22 having the outer surface as the input section 23 is formed into a cylindrical shape, the shaft part 22 may be made elastically deformable more easily by reducing rigidity of the shaft part 22 compared with the one with solid structure. The elastic deformation of the shaft part 22 allows easy suppression of the load applied from the gauge section 2 to the female screw 6 in the falling direction.

The internal diameter of the shaft part 22 is smaller than the internal diameter of the cylindrical part 21, and the external diameter of the upper end of the body 10 press fitted with the cylindrical part 21. Upon press fitting of the upper end of the body 10 with the cylindrical part 21, it is possible to prevent the body 10 from being press fitted with the shaft part 22. This prevents the shaft part 22 from being made hardly elastically deformed upon press fitting of the body 10 with the shaft part 22.

As the external diameter of the shaft part 22 (small-diameter part) is smaller than the external diameter of the cylindrical part 21, the shaft part 22 may be made elastically deformable more easily by reducing rigidity of the shaft part 22. Furthermore, the operator W is allowed to visually recognize the position of the elastically deformable shaft part 22. As a result, the operator W is allowed to hold the shaft part 22 easily so that the load applied from the gauge section 2 to the female screw 6 in the falling direction is easily suppressed by the elastic deformation of the shaft part 22.

The external diameter of the shaft part 22 having the outer surface formed as the input section 23 is reduced so as to decrease the frequency of re-holding the shaft part 22 until it is turned by the predetermined number of times upon application of the rotary torque to the input section 23 through rotation of the shaft part 22 by fingers of the operator W. Upon re-holding of the shaft part 22, the load in the axially perpendicular direction is likely to be applied to the input section 23. It is therefore possible to make the load in the axially perpendicular direction hardly applied to the input section 23 by reducing the frequency of re-holding the shaft part 22.

When fitting the gauge section 2 with the female screw 6, there may be the case where the gauge section 2 cannot be fitted with the female screw 6 any further owing to such a reason as deviation of the female screw 6 from the allowable dimension. In the above-described case, the female screw 6 may be partially plastically deformed (broken) as a result of increasing the rotary torque applied to the input section 23. This may cause the gauge section 2 to be further fitted. However, the female screw 6 cannot be inspected with accuracy, leading to the risk of breaking the gauge section 2 owing to the large rotary torque.

In the present embodiment, the transmission suppression section 20 is made of the elastically deformable soft material. The elastic deformation of the transmission suppression section 20 may absorb transmission of the rotary torque applied to the input section 23 to the gauge section 2. As the transmission suppression section 20 becomes more likely to be elastically deformed, the excessive rotary torque applied from the gauge section 2 to the female screw 6 may be suppressed more easily. As the external diameter of the input section 23 (shaft part 22) becomes smaller, the distance from the center axis C to the input section 23 becomes shorter. This makes it possible to easily suppress application of the excessive rotary torque to the input section 23.

As the upper end of the body 10 is press fitted with the cylindrical part 21 of the transmission suppression section 20, the transmission suppression section 20 may be detached from or attached to the body 10 comparatively easily. For example, the above-described structure allows the use of the transmission suppression section 20 as a protection cap for the gauge section 2 by fitting the transmission suppression section 20 with the lower end side (at the side of the gauge section 2) of the screw gauge 1 when it is stored, delivered, or carried. In the case of using the transmission suppression section 20 as the protection cap for the gauge section 2, the internal diameter of the shaft part 22 has to be sufficiently larger than the external diameter of the gauge section 2 so that the shaft part 22 is not easily brought into contact with the gauge section 2. Additionally, each dimension of the cylindrical part 21, the shaft part 22, and the body 10 has to be appropriately set so that the cylindrical part 21 is press fitted with the body 10 at the side of the gauge section 2.

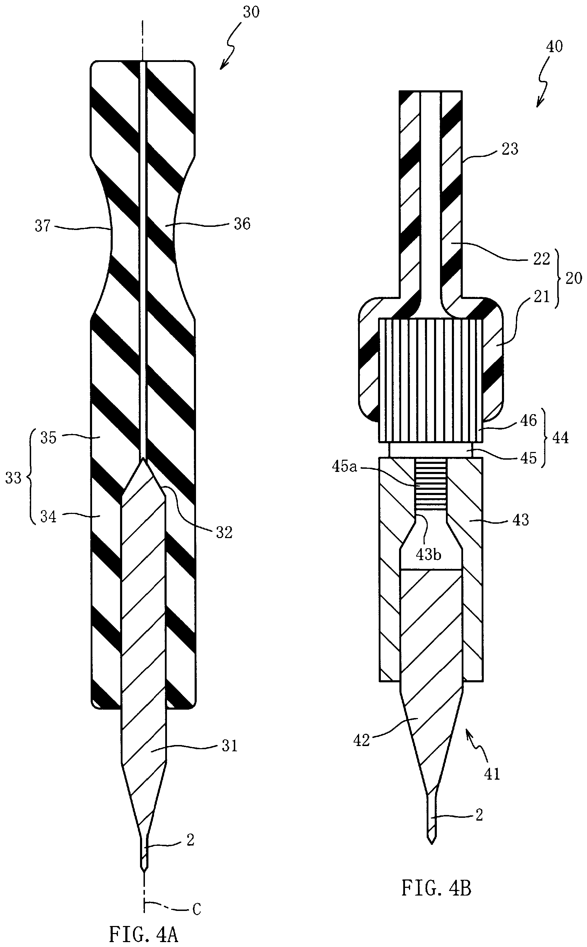

Referring to FIG. 4(a), a second embodiment will be described. As described in the first embodiment, the transmission suppression section 20 is made of the soft material of synthetic resin. In the second embodiment, a transmission suppression section 33 is made of the soft material of rubber. In the second embodiment, the same elements as those of the first embodiment will be designated with the same codes, and explanations thereof, thus will be omitted. FIG. 4(a) is a sectional view of a screw gauge 30 according to the second embodiment.

As FIG. 4(a) shows, the screw gauge 30 is a shaft-like measuring instrument for inspection whether or not the female screw 6 (see FIG. 2) of the miniature screw (nominal diameter of 1.4 mm or smaller) is within the allowable dimension, and formed substantially symmetrically to the center axis C. The screw gauge 30 includes the gauge section 2 fitted with the female screw 6 with nominal diameter of 1.4 mm or smaller, a shaft-like body 31 having the lower end to which the gauge section 2 is fixed, and the transmission suppression section 33 attached to the body 31.

The body 31 is a part integrally formed with the gauge section 2 at the lower end, and is formed to be wider than the gauge section 2. The body 31 has a tapered end part 32 having the diameter reduced toward the upper end.

The transmission suppression section 33 is made of the soft material of rubber which is comparatively soft and elastically deformable such as a silicone rubber. The transmission suppression section 33 includes a cylindrical part 34 into which the body 31 is inserted, and a shaft part 35 connected to the cylindrical part 34. Each of the cylindrical part 34 and the shaft part 35 is a cylindrical member, and has the same internal diameter under no load. The shaft part 35 includes a small-diameter part 36 having the external diameter set to be smaller than the external diameter of the cylindrical part 34. The external diameter of the shaft part 35 except the small-diameter part 36 is set to be the same as the external diameter of the cylindrical part 34. The outer surface of the small-diameter part 36 corresponds to an input section 37 to be held by the operator W (see FIG. 2).

The internal diameter of the cylindrical part 34 is smaller than the external diameter of the body 31 so that the upper end of the body 31 is press fitted with the cylindrical part 34 to attach the transmission suppression section 33 to the body 31. As the tapered end part 32 of the body 31 serves to widen the internal diameter of the cylindrical part 34, the body 31 may be easily press fitted with the cylindrical part 34.

The axial dimension of the body 31 is set to be smaller than the axial dimension from the lower end of the cylindrical part 34 to the small-diameter part 36. Accordingly, as the body 31 is press fitted with the cylindrical part 34 so that the gauge section 2 extends from the cylindrical part 34, it is possible to prevent the body 31 from being positioned inside the small-diameter part 36 or the part upper than the small-diameter part 36 (apart from the gauge section 2). As a result, it is possible to prevent the small-diameter part 36, and the shaft part 35 upper than the small-diameter part 36 from being made hardly elastically deformable owing to the body 31.

Likewise the first embodiment, the screw gauge 30 is configured to suppress transmission of the load applied to the input section 37 in the axially perpendicular direction to the gauge section 2 by the elastic deformation of the transmission suppression section 33. This allows suppression of the load applied from the gauge section 2 to the female screw 6 in the falling direction. As a result, in spite of the gauge section 2 for inspecting the female screw 6 with nominal diameter of 1.4 mm or smaller, it is possible to suppress breakage of the gauge section 2 and the female screw 6 owing to the overload applied from the gauge section 2 to the female screw 6 in the falling direction.

As the external diameter of the small-diameter part 36 is larger than the external diameter of the shaft part 35 or the cylindrical part 34 except the small-diameter part 36, the small-diameter part 36 may be made easily elastically deformable by reducing its rigidity. Furthermore, the above-described structure allows the operator W to visually recognize the position of the elastically deformable small-diameter part 36. As a result, the operator W is allowed to hold the small-diameter part 36, or the shaft part 35 positioned upper than the small-diameter part 36 (as the input section 37) more easily so that the load applied from the gauge section 2 to the female screw 6 in the falling direction may be easily suppressed by the elastic deformation of the small-diameter part 36.

Especially, the small-diameter part 36, and the shaft part 35 positioned upper than the small-diameter part 36 are securely made elastically deformable in a correlation between the axial dimension from the lower end of the cylindrical part 34 to the small-diameter part 36, and the axial dimension of the body 31. The operator W is allowed to hold the elastically deformable part easily so that the load applied from the gauge section 2 to the female screw 6 in the falling direction may further be easily suppressed by the elastic deformation of the small-diameter part 36.

The transmission suppression section 33 is made of the elastically deformable soft material so that transmission of the rotary torque applied to the input section 37 to the gauge section 2 is absorbed by the elastic deformation of the transmission suppression section 33. As the transmission suppression section 33 becomes elastically deformable more easily, application of the excessive rotary torque from the gauge section 2 to the female screw 6 becomes more likely to be suppressed. As a result, it is possible to prevent breakage of the gauge section 2 and the female screw 6 owing to over-tightening of the gauge section 2.

Referring to FIG. 4(b), a third embodiment will be described. As described in the first and the second embodiments, the excessive rotary torque applied from the input section 23 or 37 to the gauge section 2 is suppressed only by the elastic deformation of the transmission suppression section 20 or 33. In the third embodiment, the ratchet stop 44 secures to block application of the excessive rotary torque from the input section 23 to the gauge section 2. The same elements as those of the first embodiment will be designated with the same codes, and explanations thereof, thus will be omitted. FIG. 4(b) is a front view of a screw gauge 40 according to the third embodiment, while omitting a cross-section of the ratchet stop 44.

As FIG. 4(b) shows, the screw gauge 40 is a shaft-like measuring instrument for inspection whether or not the female screw 6 (see FIG. 2) of the miniature screw (nominal diameter of 1.4 mm or smaller) is within the allowable dimension. The screw gauge 40 includes the gauge section 2 to be fitted with the female screw 6 with nominal diameter of 1.4 mm or smaller, a shaft-like body 41, having the lower end to which the gauge section 2 is fixed, and the transmission suppression section 20 attached to the upper end of the body 41. The respective elements of the transmission suppression section 20 according to the third embodiment have different dimensions from those of the elements of the transmission suppression section 20 according to the first embodiment. However, shapes and functions of the transmission suppression section are substantially the same as those of the first embodiment. Accordingly, the same elements are designated with the same codes, and explanations thereof, thus will be omitted.

The body 41 includes a first part 42 integrally formed with the gauge section 2, a second part 43 to which the first part 42 is fixed, and the ratchet stop 44 attached to the second part 43. The first part 42 is a shaft-like part having the lower end to which the gauge section 2 is fixed. The first part 42 includes the thin gauge section 2 so as to be attached to the body 41.

The second part 43 is a cylindrical member into which the first part 42 is inserted and fixed. The first part 42 may be fixed to the second part 43 through various methods, for example, the use of pins and screws inserted in the axially perpendicular direction, and press fitting. Preferably, the second part 43 is made of the metal with lower HRC than the first part 42, or the synthetic resin. This makes it possible to process the second part 43 more easily than the process of the first part 42.

The ratchet stop 44 is disposed at the upper end of the body 41, opposite the lower end in the axial direction, to which the gauge section 2 is fixed. The ratchet stop 44 includes a fixation part 45 to be fixed to the second part 43, and a rotary part 46 to be press fitted with the cylindrical part 21 of the transmission suppression section 20. A male screw 45a of the fixation part 45 is fitted with a female screw 43b formed on an inner circumferential surface of the second part 43 so that the ratchet stop 44 is detachably attached to the second part 43. The external diameter of the rotary part 46 is set to be substantially the same as the external diameter of the second part 43.

If the rotary torque applied to the rotary part 46 relative to the fixation part 45 is smaller than a predetermined threshold value, the ratchet stop 44 rotates the rotary part 46 and the fixation part 45 integrally so as to transmit the rotary torque from the rotary part 46 to the fixation part 45. Meanwhile, if the rotary torque applied to the rotary part 46 relative to the fixation part 45 is equal to or larger than the threshold value, the ratchet stop 44 rotates the rotary part 46 relative to the fixation part 45 so as to block the transmission of the rotary torque from the rotary part 46 to the fixation part 45.

If the rotary torque in the direction for screwing the gauge section 2 to the female screw 6 (screw-tightening direction) is applied to the rotary part 46, the ratchet stop 44 switches between transmission and blocking of the rotary torque in accordance with the threshold value. Meanwhile, if the rotary torque in the direction opposite the screw-tightening direction is applied to the rotary part 46, the ratchet stop 44 constantly transmits the rotary torque from the rotary part 46 to the fixation part 45.

As an internal mechanism (mechanical overload protection device) of the ratchet stop 44 operated as descried above is known, the explanation of such a mechanism will be omitted. The threshold value for the ratchet stop 44 is adjusted by replacing or cutting the built-in spring, for example. It is possible to use the ratchet stop 44 having the internal mechanism capable of appropriately changing the threshold value by operating the operation unit for adjustment purposes.

Likewise the first embodiment, the above-described screw gauge 40 is configured to allow the transmission suppression section 20 to be elastically deformed to suppress transmission of the load applied to the input section 23 in the axially perpendicular direction to the gauge section 2. This ensures to suppress the load applied from the gauge section 2 to the female screw 6 in the falling direction. As a result, in spite of the gauge section 2 for inspecting the female screw 6 with nominal diameter of 1.4 mm or smaller, it is possible to suppress breakage of the gauge 2 and the female screw 6 owing to the overload applied from the gauge section 2 to the female screw 6 in the falling direction.

If the rotary torque input to the input section 23 (transmission suppression section 20) in the screw-tightening direction is equal to or larger than the threshold value, the ratchet stop 44 blocks transmission of the rotary torque to the fixation part 45 at the side of the gauge section 2 from the rotary part 46 to which the transmission suppression section 20 is attached. This makes it possible to prevent breakage of the gauge section 2 and the female screw 6 owing to over-tightening of the gauge section 2. The threshold value for the ratchet stop 44 may be appropriately set based on the strength in accordance with the dimension of the gauge section 2.

It is preferable to set the threshold value for the ratchet stop 44 to 2 N·m or smaller. This makes it possible to sufficiently suppress breakage of the gauge section 2 and the female screw 6 owing to over-tightening of the gauge section 2 in spite of the gauge section 2 for inspecting the female screw 6 with nominal diameter of 1.4 mm or smaller. It is further preferable to set the threshold value for the ratchet stop 44 to 0.01 N·m or larger. This makes it possible to securely fit the gauge section 2 with the female screw 6 within the allowable dimension.

As the transmission suppression section 20 is made of the elastically deformable soft material, transmission of the rotary torque applied to the input section 23 to the gauge section 2 may be absorbed by the elastic deformation of the transmission suppression section 20. Especially, even in the case of slight change in the threshold value for the ratchet stop 44 in accordance with the rotation speed of the input section 23, the transmission suppression section 20 securely prevents over-tightening of the gauge section 2 so as to ensure prevention of breakage of the gauge section 2 and the female screw 6.

The rotary part 46 of the ratchet stop 44 attached to the upper end of the body 41 is press fitted with the cylindrical part 21 of the transmission suppression section 20. The simple structure allows the ratchet stop 44 to prevent breakage of the gauge section 2 and the female screw 6, and the transmission suppression section 20 to suppress breakage of the gauge section 2 and the female screw 6. For example, it is possible to easily attach the transmission suppression section 20 to the commercially available ratchet stop 44.

The external diameter of the shaft part 22 is smaller than the external diameter of the cylindrical part 21. This allows the shaft part 22 to be easily elastically deformable, and further allows the frequency of re-holding the shaft part 22 to be reduced upon application of the rotary torque to the input section 23 (shaft part 22). Especially, the external diameter of the shaft part 22 is smaller than the external diameter of the body 41 at the upper end (rotary part 46) side to be press fitted with the cylindrical part 21. This allows the shaft part 22 to be easily elastically deformable, and further allows the frequency of re-holding the shaft part 22 to be reduced upon application of the rotary torque to the input section 23. As a result, the load applied from the gauge section 2 to the female screw 6 in the falling direction may further be easily suppressed, and the load in the axially perpendicular direction is hardly applied to the input section 23. As the external diameter of the input section 23 (shaft part 22) is made smaller, the distance from the center axis C to the input section 23 becomes shorter, it is possible to easily suppress application of the excessive rotary torque to the input section 23.

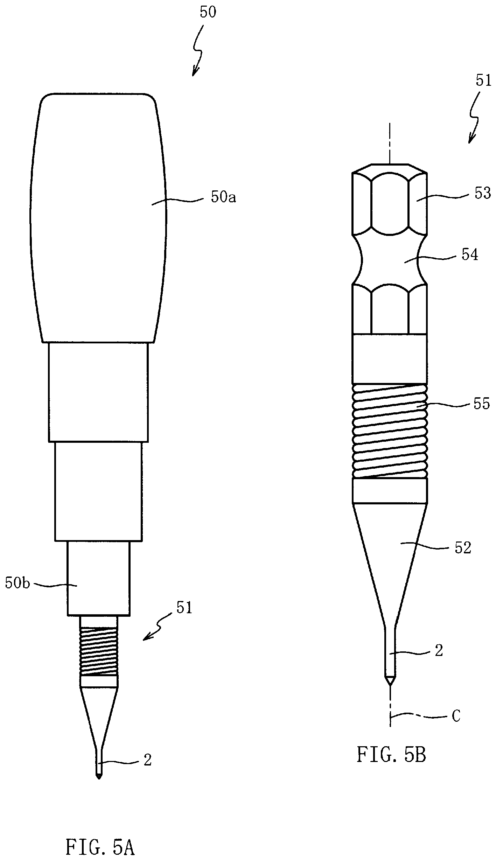

Referring to FIGs. 5(a) and 5(b), a non-claimed example will be described. As described in the first embodiment, the screw gauge 1 is directly held by the operator W. Meanwhile, the non-claimed example describes a screw gauge 51 attached to a torque driver 50 held by the operator W. The same elements as those of the first embodiment will be designated with the same codes, and explanations thereof, thus will be omitted. FIG. 5(a) is a front view of the torque driver 50 to which the screw gauge 51 according to the non-claimed example is attached. FIG. 5(b) is a front view of the screw gauge 51 detached from the torque driver 50.

As FIG. 5(a) shows, the torque driver 50 allows the operator W to hold and turn a handle 50a at the upper end (see FIG. 2) so as to rotate the respective bits replaceably held by a bit holding part 50b at the lower end. In the present example, a screw gauge 51 is used as the bit to be held by the bit holding part 50b. If the rotary torque applied to the handle 50a exceeds the threshold value, the torque driver 50 blocks transmission of the rotary torque from the handle 50a to the bit holding part 50b (screw gauge 51) for idling the handle 50a relative to the bit holding part 50b. In other words, the torque driver 50 is a driver which has a built-in mechanical overload protection device like the ratchet stop 44 according to the third embodiment.

As FIGs. 5(a) and 5(b) show, the screw gauge 51 is a shaft-like measuring instrument for inspection whether or not the female screw 6 (see FIG. 2) of the miniature screw (nominal diameter of 1.4 mm or smaller) is within the allowable dimension. The screw gauge 51 includes the gauge section 2 to be fitted with the female screw 6 with nominal diameter of 1.4 mm or smaller, a shaft-like body 52 having a lower end to which the gauge section 2 is fixed, a transmission suppression section 55 disposed at the center of the body 52 in the axial direction, and an input section 53 that is fixed at the upper end of the body 52, and held with the bit holding part 50b.

The body 52 is separated in the axial direction while interposing the transmission suppression section 55 therebetween. The lower end of the lower part of the body 52 is integrally formed with the gauge section 2. Both the lower side and the upper side of the body 52 are made of the same metal material. The transmission suppression section 55 is a clockwise-wound coil spring formed by spirally winding wires which are brought into tight contact in the axial direction. The upper and the lower ends of the transmission suppression section 55 are fixed to the respective parts of the body 52 through welding and the like.

The input section 53 is formed corresponding to the bit holding part 50b so as to be held thereby. The input section 53 is mainly formed into a hexagonal prism, and has a groove 54 at the center in the axial direction around the whole circumference. The groove 54 is fitted with a ball (not shown) built in the bit holding part 50b so that the screw gauge 51 is attached to the bit holding part 50b. The outer surface of the input section 53 as the hexagonal prism rotates the screw gauge 51 upon reception of the external force such as the rotary torque from the bit holding part 50b.

Likewise the first embodiment, even if the load in the axially perpendicular direction is applied to the input section 53 via the torque driver 50, the screw gauge 51 allows the transmission suppression section 55 to elastically deform for suppression of transmission of the load to the gauge section 2. Therefore, the load applied from the gauge section 2 to the female screw 6 in the falling direction may be suppressed. As a result, even in the case of the gauge section 2 for inspection of the female screw 6 with nominal diameter of 1.4 mm or smaller, it is possible to suppress breakage of the gauge section 2 and the female screw 6 owing to the overload applied from the gauge section 2 to the female screw 6 in the falling direction.

If the screw tightening direction of the gauge section 2 is clockwise, the transmission suppression section 55 formed as the clockwise-wound coil spring is capable of absorbing the rotary torque to be transmitted from the side of the input section 53 to the gauge section 2 by the elastic deformation of the transmission suppression section 55 as a result of diameter expansion of the coil spring. This makes it possible to easily suppress application of the excessive rotary torque from the gauge section 2 to the female screw 6.

The transmission suppression section 55 is constituted by the clockwise-wound coil spring having the respective wires brought into tight contact in the axial direction. Even if the rotary torque generated when the gauge section 2 is pulled out from the female screw 6 is applied to the transmission suppression section 55, it is possible to suppress deformation of the coil spring having the wires in the tight contact state. That is, the rotary torque generated when the gauge section 2 is pulled out from the female screw 6 may be securely transmitted to the gauge section 2.

The screw gauge 51 is attached to the torque driver 50 with the built-in mechanical overload protection device for operation. Likewise the third embodiment having the ratchet stop 44 attached to the screw gauge 40, the above-described structure ensures to prevent breakage of the gauge section 2 and the female screw 6 owing to over-tightening of the gauge section 2. The threshold value based on which the handle 50a is idled relative to the bit holding part 50b may be appropriately set based on the strength in accordance with the dimension of the gauge section 2. The threshold value is set to be in the range between 0.01 N·m or larger and 2 N·m or smaller. Even in the case of the gauge section 2 for inspection of the female screw 6 with nominal diameter of 1.4 mm or smaller, it is possible to sufficiently suppress breakage of the gauge section 2 and the female screw 6 owing to over-tightening of the gauge section 2, and to securely fit the gauge section 2 with the female screw 6 within the allowable dimension.

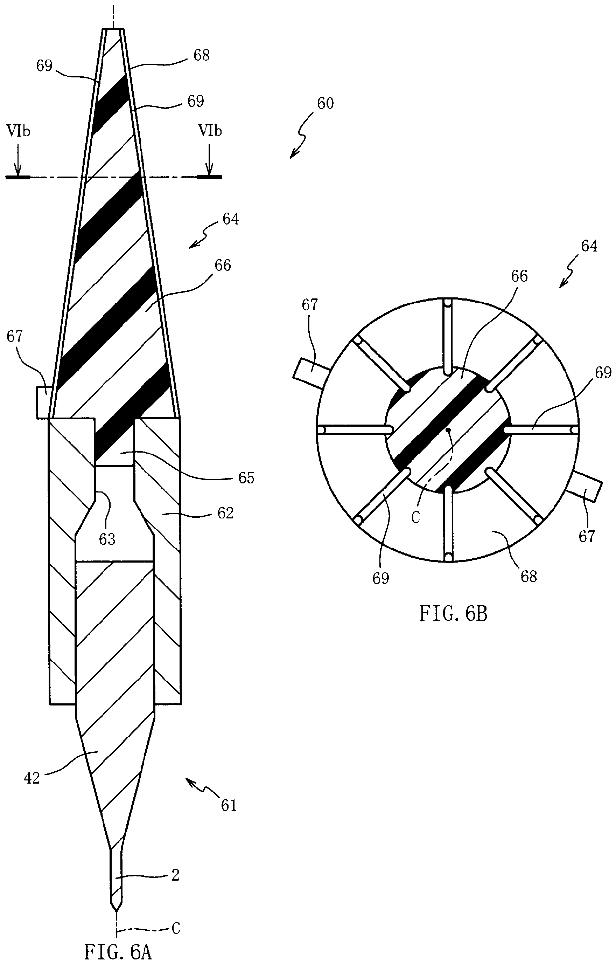

Referring to FIGs. 6(a) and 6(b), a fifth embodiment will be described. As described in the first and the second embodiments, the bodies 10, 31 are partially press fitted with the corresponding cylindrical parts 21, 34 of the transmission suppression sections 20, 33, respectively. In the fifth embodiment, a transmission suppression section 64 is partially press fitted with a body 61. The same elements as those of the first and the third embodiments will be designated with the same codes, and explanations thereof, thus will be omitted. FIG. 6(a) is a sectional view of a screw gauge 60 according to the fifth embodiment, and FIG. 6(b) is a sectional view of the screw gauge 60 taken along line VIb-VIb of FIG. 6(a).

As FIG. 6(a) shows, the screw gauge 60 is a shaft-like measuring instrument for inspection whether or not the female screw 6 (see FIG. 2) of the miniature screw (nominal diameter of 1.4 mm or smaller) is within the allowable dimension, and formed substantially symmetrically to the center axis C. The screw gauge 60 incudes the gauge section 2 to be fitted with the female screw 6 with nominal diameter of 1.4 mm or smaller, a shaft-like body 61 having a lower end to which the gauge section 2 is fixed, and the transmission suppression section 64 to be attached to the body 61.

The body 61 includes the first part 42 integrally formed with the gauge section 2, and a second part 62 to which the first part 42 is fixed. The second part 62 is a cylindrical member having the lower end side into which the first part 42 is inserted and fixed. The cylindrical second part 62 has an open upper end having its inner circumference formed as an insertion hole 63. Preferably, the second part 62 is made of the metal with HRC lower than the first part 42, or the synthetic resin. This makes it possible to easily process the second part 62 compared with the process of the first part 42.

The transmission suppression section 64 is made of the elastically deformable synthetic resin soft material with comparatively low rigidity, for example, vinyl chloride. The transmission suppression section 64 includes a mount part 65 to be press fitted with the insertion hole 63 formed in the second part 62, and a shaft part 66 connected to the mount part 65. The mount part 65 is detachably attached to the upper end of the body 61. The above-described structure allows the shape and dimension of the shaft part 66 to be easily changed by preparing a plurality of transmission suppression sections 64, each shaft part 66 of which has the different shape and different dimension (length, thickness), while allowing the mount part 65 to have the common shape.

The shaft part 66 is a solid rod-like member. The external diameter of the lower end of the shaft part 66 is set to be substantially the same as the external diameter of the second part 62. The external diameter of the shaft part 66 has its diameter reduced into the tapered shape from the lower end to the upper end (in the direction apart from the gauge section 2). In other words, the external diameter of the shaft part (small-diameter part) 66 is set to be smaller than the external diameter of the upper end of the body 61 over whole in the axial direction. An inclination angle of the outer circumferential surface of the shaft part 66 relative to the center axis C may be appropriately set without being limited to the angle as illustrated in FIG. 6(a).

The shaft part 66 includes a protrusion 67 protruding from the outer circumferential surface at the lower end in the axially perpendicular direction. The protrusion 67 extends more outwardly than the outer circumferential surface of the second part 62 in the axially perpendicular direction. The above-described protrusion 67 is capable of preventing rolling of the screw gauge 60 disposed sideways on the work stand or the desk.

The outer circumferential surface of the shaft part 66 corresponds to an input section 68 to be held by the operator W (see FIG. 2). The input section 68 (outer circumferential surface of the shaft part 66) includes a plurality of grooves 69 formed in the axial direction in an arrangement at intervals in a circumferential direction. The above-described grooves 69 exhibit an anti-slipping function upon rotation of the shaft part 66 by the operator W while holding the input section 68.

Likewise the first embodiment, the screw gauge 60 allows the transmission suppression section 64 to elastically deform to suppress transmission of the load applied to the input section 68 in the axially perpendicular direction to the gauge section 2. This allows suppression of the load applied from the gauge section 2 to the female screw 6 in the falling direction. As a result, in spite of the gauge section 2 for inspection of the female screw 6 with nominal diameter of 1.4 mm or smaller, it is possible to suppress breakage of the gauge section 2 and the female screw 6 owing to the overload applied from the gauge section 2 to the female screw 6 in the falling direction.

The external diameter of the shaft part 66 is gradually reduced from the lower end to the upper end. The point (position of the input section 68) of the outer circumferential surface of the shaft part 66, which is held by the operator W is shifted in the axial direction so as to easily change the external diameter of the input section 68. Consequently, it is possible to easily change the external diameter of the input section 68 depending on the preference of the operator W to allow easy application of the rotary torque to the input section 68.

The present invention has been described based on the embodiments. It is to be readily understood that the present invention is not limited to those embodiments, and may be modified and improved in various ways in the range without deviating from the scope of the present invention as defined by the appended claims. For example, it is possible to appropriately change the respective shapes and the respective dimensions of the gauge section 2, the bodies 10, 31, 41, 52, 61, the transmission suppression sections 20, 33, 55, 64, and the like. It is also possible to change each external diameter of the shaft parts 22, 35, 66 in a multistage manner, or either partial decrease or increase in the external diameter as it becomes apart from the gauge section 2.

As described in the embodiments, the screw gauges 1, 30, 40, 51, 60 are used for inspection whether or not the female screw 6 of the miniature screw (nominal diameter of 1.4 mm or smaller) is within the allowable dimension. The present invention is applicable to the screw gauge for inspection of the female screw of the metric thread with nominal diameter of 1.4 mm or smaller.

As described in the embodiments, the gauge section 2 is in the form of the go-side screw plug gauge for inspecting the effective diameter of the female screw 6. However, the present invention is not necessarily limited to those embodiments. It is possible to appropriately adjust the respective dimensions of the gauge section 2 so as to constitute the no-go-side screw plug gauge as the gauge section 2. It is possible to constitute the go-side or no-go-side plane plug gauge as the gauge section 2 for inspecting the internal diameter of the female screw 6 by removing the thread of the gauge section 2. If the gauge section 2 is constituted in the form of the plane plug gauge, the axial load as the external force for fitting the gauge section 2 with the female screw 6 is input to the corresponding input sections 23, 37, 53, 68. In other words, as the force in the rotation direction is not applied to the input sections 23, 37, 53, 68, it is possible to omit the mechanical overload protection device such as the ratchet stop 44. For example, in the third embodiment, the ratchet stop 44 may be removed from the second part 43 so that the upper end of the second part 43 may be press fitted with the cylindrical part 21 of the transmission suppression section 20.

As described in the first, the second, the third and the sixth embodiments, each of the transmission suppression sections 20, 33, 64 is made of the soft synthetic resin material such as vinyl chloride, or the soft rubber material such as silicone rubber. However, the present invention is not necessarily limited to those embodiments. It is possible to use the synthetic resin except vinyl chloride, or the rubber except silicone rubber for forming the transmission suppression sections 20, 33, 64 so long as the desired elastic modulus is secured. It is also possible to use the thermoplastic elastomer, and a foamed synthetic resin such as urethane foam for forming the transmission suppression sections 20, 33, 64. In non-claimed examples, it is possible to use the coil spring for forming the transmission suppression sections 20, 33, 64. It is further possible to use the synthetic resin or rubber for forming the transmission suppression section 55 according to the non-claimed example.

In a further non-claimed example, it is also possible to use the universal joint for forming the transmission suppression section. In this case, the above-described structure secures to make the load in the axially perpendicular direction applied to the input section 23, 37, 53, or 68 hardly applicable to the gauge section 2. This allows further suppression of breakage of the gauge section 2 and the female screw 6 as a result of hardly applying the load from the gauge section 2 to the female screw 6 in the falling direction.

As described in the first, the second, and the third embodiments, the bodies 10, 31, 41 are partially press fitted with the corresponding cylindrical parts 21, 34 of the transmission suppression sections 20, 33, respectively. However, the present invention is not necessarily limited to those embodiments. The bodies 10, 31, 41 may be partially inserted into the corresponding cylindrical parts 21, 34, respectively so long as the load for fitting the gauge section 2 with the female screw 6 is transmitted from the corresponding input sections 23, 37 to the gauge section 2. Specifically, the bodies 10, 31, 41 may be partially inserted into the corresponding cylindrical parts 21, 34 so as to be fixed to the corresponding bodies 10, 31, 41, respectively using the cable tie or the like.

As described in the first and the third embodiments, the external diameter of the cylindrical shaft part 22 is smaller than the external diameter of the cylindrical part 21. However, the present invention is not necessarily limited to those embodiments. It is possible to set the external diameter of the shaft part 22 to be the same as or larger than the external diameter of the cylindrical part 21. It is also possible to set the internal diameter of the shaft part 22 to be the same as or larger than the internal diameter of the cylindrical part 21. When using the transmission suppression section 20 as the protection cap for the gauge section 2, the above-described structure is capable of making the cylindrical part 21 hardly in contact with the gauge section 2, thus allowing the transmission suppression section 20 to improve its function for protecting the gauge section 2. It is also possible to use the solid rod-like member for forming the shaft part 22 instead of using the cylindrical member.

As described in the non-claimed example, the screw gauge 51 is attached to the torque driver 50 which is manually turned by the operator W while holding the handle 50a. It is also possible to use the screw gauge in the form of the torque driver 50 to which the screw gauge 51 is attached while making the handle 50a serving as the input section. It is also possible to use not only the torque driver 50 for manually turning the screw gauge 51 but also the torque driver for electrically turning the screw gauge 51.

As described in the second embodiment, the internal diameter of the cylindrical transmission suppression section 33 is kept the same over the whole in the axial direction. However, the present invention is not necessarily limited to the embodiment. It is possible to make the internal diameter of the transmission suppression section different between one end side and the other end side by reducing the internal diameter of the cylindrical transmission suppression section from the one end side toward the other end side. In this case, the range of the external diameter of the body press fittable with the one end side of the transmission suppression section may be made different from the range of the external diameter of the body press fittable with the other end side of the transmission suppression section. As a result, it is possible to increase the range of the external diameter of the body which allows attachment of the transmission suppression section.

As described in the fifth embodiment, the transmission suppression section 64 includes the protrusion 67 and the grooves 69. However, the present invention is not necessarily limited to the embodiment. The transmission suppression sections 20, 33 according to the first, the second, and the third embodiments may also be provided with rolling prevention protrusions, and anti-slipping grooves. Each shape of the protrusion and the groove may be suitably changed. In order to prevent rolling of the screw gauge, it is possible to form a part of the transmission suppression section 20, 33, or the body 10, 31, 41 into the polygonal shape, which will be in contact with the desk or the stand on which the corresponding screw gauge 1, 30, or 40 is placed sideways.

### List of Reference Signs

- 1, 30, 40, 51, 60:: screw gauge
- 2:: gauge section
- 5:: measured object
- 6:: female screw
- 10, 31, 41, 52, 61:: body
- 20, 33, 55, 64:: transmission suppression section
- 21, 34:: cylindrical part (mount part)
- 22, 66:: shaft part (small-diameter part)
- 23, 37, 53, 68:: input section
- 35:: shaft part
- 36:: small-diameter part
- 44:: ratchet stop
- 65:: mount part

## Claims

1. A screw gauge (1, 30, 40, 51, 60) which is formed into a shaft-like shape for manually inspecting a female screw (6) with nominal diameter of 1.4 mm or smaller by an operator, the female screw (6) being formed in a measured object(5), the screw gauge(1, 30, 40, 51, 60) comprising:
a gauge section (2) which is formed at an end of the screw gauge (1, 30, 40 ,51, 60) in an axial direction, and configured to fit with the female screw (6);
an input section (23, 37, 53, 68) which is configured to accommodate an input of an external force for fitting the gauge section(2) with the female screw (6); and
a transmission suppression section (20, 33, 55, 64) disposed between the input section (23, 37, 53, 68) and the gauge section (2), wherein the transmission suppression section (20, 33, 55, 64) is configured to suppress transmission of a load in an axially perpendicular direction applied to the input section (23, 37, 53, 68) to the gauge section(2),
wherein the transmission suppression section (20, 33, 55, 64) is configured to elastically deform to absorb the transmission of the load applied to the input section (23, 37, 53, 68) to the gauge section(2),
the input section (23, 37, 68) is a part configured to be held by the operator in the hand, and provided at least on a part of an elastically deformable outer surface of the transmission suppression section (20,33,64), and
the screw gauge (1, 30, 40, 60) further comprises a shaft-like body (10, 31, 41, 61) having one end to which the gauge section (2) is fixed, wherein:
the transmission suppression section (20, 33, 64) includes a mount part (21, 34, 65) which is detachably attached to the other end of the body (10, 31, 41, 61), opposite the one end in the axial direction, and an elastically deformable shaft part (22, 35, 66), having an end at a side of the gauge section (2) connected to the mount part (21, 34, 65); and
the input section (23, 37, 68) is disposed on the shaft part (22, 35, 66), **characterized in that**
the transmission suppression section (20, 33, 64) is made of an elastically deformable soft material.

2. The screw gauge (1, 30, 40) according to claim 1, wherein the mount part (21, 34) is a cylindrical part (21, 34) into which the other end of the body (10, 31, 41) is inserted and attached.

3. The screw gauge (40) according to claim 2, wherein:
the gauge section (2) is a male screw which is configured to be fitted with the female screw (6) by a rotary torque input to the input section (23) in a screw-tightening direction;
the body (41) includes a ratchet stop (44) which is disposed at the other end, and is inserted into the cylindrical part (21); and
if the rotary toque input to the input section (23) in the screw-tightening direction is smaller than a threshold value, the ratchet stop (44) is configured to transmit the rotary torque to the gauge section (2), and if the rotary torque input to the input section (23) in the screw-tightening direction is equal to or larger than the threshold value, the ratchet stop (44) is configured to block the transmission of the rotary torque to the gauge section (2).

4. The screw gauge (40) according to claim 3, wherein the threshold value for the ratchet stop (44) is set to be in a range between 0.01 Nm or larger and 2 Nm or smaller.

5. The screw gauge (1, 30, 40) according to any of claims 2 to 4, wherein the shaft part (22, 35) includes a small-diameter part (22, 36) having an external diameter set to be smaller than an external diameter of the cylindrical part (21, 34).

6. The screw gauge (40, 60) according to any of claims 1 to 5, wherein the shaft part (22, 66) includes a small-diameter part (22,66) having an external diameter set to be smaller than an external diameter of the other end of the body (41, 61).

7. The screw gauge (1, 30, 40) according to any of claims 1 to 6, wherein the shaft part (22, 35) is formed into a cylindrical shape.

## Patentansprüche

1. Gewindelehre (1, 30, 40, 51, 60), die für ein manuelles Prüfen eines Muttergewindes (6) mit einem nominalen Durchmesser von 1,4 mm oder kleiner durch einen Anwender in eine Schaft-artige Form gebildet ist, wobei das Muttergewinde (6) in einem gemessenen Objekt (5) gebildet ist, wobei die Gewindelehre (1, 30, 40, 51, 60) aufweist:
einen Lehrenabschnitt (2), der in einer axialen Richtung an einem Ende der Gewindelehre (1, 30, 40, 51, 60) gebildet ist, und dazu konfiguriert ist, in das Muttergewinde (6) eingepasst zu werden;
einen Eingabeabschnitt (23, 37, 53, 68), der dazu konfiguriert ist, eine Eingabe einer äußeren Kraft zum Einpassen des Lehrenabschnitts (2) in das Muttergewinde (6) aufzunehmen; und
einen Übertragungsunterdrückungsabschnitt (20, 33, 55, 64), der zwischen dem Eingabeabschnitt (23, 37, 53, 68) und dem Lehrenabschnitt (2) angeordnet ist, wobei der Übertragungsunterdrückungsabschnitt (20, 33, 55, 64) dazu konfiguriert ist, eine Übertragung einer in einer Richtung senkrecht zur Achse auf den Eingabeabschnitt (23, 37, 53, 68) aufgebrachten Last auf den Lehrenabschnitt (2) zu unterdrücken,
wobei der Übertragungsunterdrückungsabschnitt (20, 33, 55, 64) dazu ausgebildet ist, sich elastisch zu verformen, um die Übertragung der auf den Eingabeabschnitt (23, 37, 53, 68) aufgebrachten Last auf den Lehrenabschnitt (2) zu unterdrücken,
der Eingabeabschnitt (23, 37, 68) ein Teil ist, der dazu konfiguriert ist, durch den Anwender in der Hand gehalten zu werden, und zumindest auf einem Teil mit einer elastisch verformbaren äußeren Oberfläche des Übertragungsunterdrückungsabschnitt (20, 33, 64) versehen ist, und
die Gewindelehre (1, 30, 40, 60) ferner einen Schaft-artigen Körper (10, 31, 41, 61) aufweist, der ein Ende hat, an dem der Lehrenabschnitt (2) befestigt ist, wobei:
der Übertragungsunterdrückungsabschnitt (20, 33, 64) einen Montageteil (21, 34, 65), der in der axialen Richtung an dem anderen Ende des Körpers (10, 31, 41, 61) gegenüber dem einen Ende abnehmbar befestigt ist, und einen elastisch verformbaren Schaftteil (22, 35, 66), der auf einer Seite des Lehrenabschnitts (2) ein mit dem Montageteil (21, 34, 65) verbundenes Ende hat, enthält; und
der Eingabeabschnitt (23, 37, 68) auf dem Schaftteil (22, 35, 66) angeordnet ist, **dadurch gekennzeichnet, dass**
der Übertragungsunterdrückungsabschnitt (20, 33, 64) aus einem elastisch verformbaren weichen Material hergestellt ist.

2. Gewindelehre (1, 30, 40) gemäß Anspruch 1, wobei der Montageteil (21, 34) ein zylindrisches Teil (21, 34) ist, in das das andere Ende des Körpers (10, 31, 41) eingebracht ist und befestigt ist.

3. Gewindelehre (40) gemäß Anspruch 2, wobei:
der Lehrenabschnitt (2) eine Schraubenspindel ist, die dazu konfiguriert ist, durch eine Drehmomenteingabe in einer Schraubenanzugsrichtung auf den Eingabeabschnitt (23) in das Muttergewinde (6) eingepasst zu werden;
der Körper (41) eine Gefühlschraube (44) enthält, die an dem anderen Ende angeordnet ist und in den zylindrischen Teil (21) eingebracht ist; und
wenn die Drehmomenteingabe auf den Eingabeabschnitt (23) in der Schraubenanzugsrichtung kleiner als ein Schwellwert ist, die Gefühlschraube (44) dazu konfiguriert ist, das Drehmoment auf den Lehrenabschnitt (2) zu übertragen, und wenn die Drehmomenteingabe auf den Eingabeabschnitt (23) in der Schraubenanzugsrichtung gleich oder größer als der Schwellwert ist, die Gefühlschraube (44) dazu konfiguriert ist, die Übertragung des Drehmoments auf den Lehrenabschnitt (2) zu unterbrechen.

4. Gewindelehre (40) gemäß Anspruch 3, wobei der Schwellwert für die Gefühlschraube (44) gewählt ist, in einem Bereich zwischen 0,01 Nm oder größer und 2 Nm oder kleiner zu sein.

5. Gewindelehre (1, 30, 40) gemäß einem der Ansprüche 2 bis 4, wobei der Schaftteil (22, 35) einen kleiner-Durchmesser-Teil (22, 36) enthält, der einen Außendurchmesser hat, der gewählt ist, kleiner als ein Außendurchmesser des zylindrischen Teils (21, 34) zu sein.

6. Gewindelehre (40, 60) gemäß einem der Ansprüche 1 bis 5, wobei der Schaftteil (22, 66) einen kleiner-Durchmesser-Teil (22, 66) enthält, der einen Außendurchmesser hat, der gewählt ist, kleiner als ein Außendurchmesser des anderen Ende des Körpers (41, 61) zu sein.

7. Gewindelehre (1, 30, 40) gemäß einem der Ansprüche 1 bis 6, wobei der Schaftteil (22, 35) in eine zylindrische Form geformt ist.

## Revendications

1. Calibre de filetage (1, 30, 40, 51, 60) qui est réalisé en une forme d'arbre afin de permettre l'inspection manuelle d'un filetage femelle (6) présentant un diamètre nominal inférieur ou égal à 1,4 mm, par un opérateur, le filetage femelle (6) étant formé sur un objet (5) à mesurer, le calibre de filetage (1, 30, 40, 51, 60) comprenant :
une section de calibre (2) qui est formée à une extrémité du calibre de filetage (1, 30, 40, 51, 60) dans une direction axiale, et configurée de manière à s'assembler dans le filetage femelle (6) ;
une section d'entrée (23, 37, 53, 68) qui est configurée de manière à recevoir une entrée d'un effort externe afin d'assurer l'assemblage de la section de calibre (2) dans le filetage femelle (6) ; et
une section de suppression de transmission (20, 33, 55, 64) disposée entre la section d'entrée (23, 37, 53, 68) et la section de calibre (2), dans lequel la section de suppression de transmission (20, 33, 55, 64) est configurée de manière à supprimer la transmission dans une direction axialement perpendiculaire d'une charge appliquée sur la section d'entrée (23, 37, 53, 68) vers la section de calibre (2),
dans lequel la section de suppression de transmission (20, 33, 55, 64) est configurée de manière à se déformer élastiquement afin d'absorber la transmission de la charge appliquée sur la section d'entrée (23, 37, 53, 68) vers la section de calibre (2),
la section d'entrée (23, 37, 68) est une partie configurée de manière à être tenue dans la main par l'opérateur et agencée au moins sur une partie d'une surface externe pouvant être déformée de manière élastique de la section de suppression de transmission (20, 33, 64), et
le calibre de filetage (1, 30, 40, 60) comprend, en outre, un corps en forme d'arbre (10, 31, 41, 61) présentant une première extrémité sur laquelle la section de calibre (2) est fixée, dans lequel :
la section de suppression de transmission (20, 33, 64) comporte une partie de montage (21, 34, 65) qui est fixée de manière à pouvoir être séparée sur l'autre extrémité du corps (10, 31, 41, 61), opposée à la première extrémité dans la direction axiale, et une partie d'arbre pouvant être déformée de manière élastique (22, 35, 66), présentant une extrémité au niveau d'un côté de la section de calibre (2) reliée à la partie de montage (21, 34, 65) ; et
la section d'entrée (23, 37, 68) est disposée sur la partie d'arbre (22, 35, 66), **caractérisée en ce que**
la section de suppression de transmission (20, 33, 64) est réalisée en un matériau souple pouvant être déformé de manière élastique.

2. Calibre de filetage (1, 30, 40) selon la revendication 1, dans lequel la partie de montage (21, 34) est une partie cylindrique (21, 34) dans laquelle l'autre extrémité du corps (10, 31, 41) est insérée et fixée.

3. Calibre de filetage (40) selon la revendication 2, dans lequel :
la section de calibre (2) est un filetage mâle qui est configuré de manière à s'assembler dans le filetage femelle (6) avec une entrée de couple de rotation sur la section d'entrée (23) suivant un sens de serrage de vis ;
le corps (41) comporte une butée de rochet (44) qui est disposée au niveau de l'autre extrémité et est insérée dans la partie cylindrique (21) ; et
si l'entrée de couple de rotation sur la section d'entrée (23) dans le sens de serrage de vis est inférieure à une valeur de seuil, la butée de rochet (44) est configurée de manière à transmettre le couple de rotation à la section de calibre (2), et si l'entrée de couple de rotation sur la section d'entrée (23) dans le sens de serrage de vis est supérieure ou égale à la valeur de seuil, la butée de rochet (44) est configurée de manière à bloquer la transmission du couple de rotation sur la section de calibre (2).

4. Calibre de filetage (40) selon la revendication 3, dans lequel la valeur de seuil pour la butée de rochet (44) est réglée de manière à être supérieure ou égale à 0,01 Nm et inférieure ou égale à 2 Nm.

5. Calibre de filetage (1, 30, 40) selon l'une quelconque des revendications 2 à 4, dans lequel la partie d'arbre (22, 35) comporte une partie de faible diamètre (22, 36) présentant un diamètre externe défini de manière à être inférieur à un diamètre externe de la partie cylindrique (21, 34).

6. Calibre de filetage (40, 60) selon l'une quelconque des revendications 1 à 5, dans lequel la partie d'arbre (22, 66) comporte une partie de faible diamètre (22, 66) présentant un diamètre externe défini de manière à être inférieur au diamètre externe de l'autre extrémité du corps (41, 61).

7. Calibre de filetage (1, 30, 40) selon l'une quelconque des revendications 1 à 6, dans lequel la partie d'arbre (22, 35) est réalisée en une forme cylindrique.
